# EUROPEAN PATENT APPLICATION

(11) **EP 1 826 106 A1**
(43) Date of publication of application: **29.08.2007**
(21) Application number: 07250817.9
(22) Date of filing: 28.02.2007
(51) Int. Cl.: B62D 59/04

(54) **Machines for manoeuvring trailers**

(30) Priority: 28.02.2006 GB 0603967
(71) Applicant: Yates, James Richard, Christchurch BH23 4HD (GB)
(72) Inventor: Yates, James Richard, Christchurch BH23 4HD (GB)
(74) Representative: Targett, Kenneth Stanley

(57) **Abstract**

A machine (10) for manoeuvring a trailer (34,38) comprises a roller (26), a motor and gearbox (14,16) for driving the roller and a mechanism (12,20,22,36) for mounting the roller on the trailer for movement between a disengaged position in which the roller is disengaged from a tyre (38) of the trailer and an engaged position in which a peripheral rough friction surface (32) of the roller is pressed into engagement with the tread of the tyre. When the roller is driven while in the engaged position, the roller frictionally drives the trailer tyre. The roller comprises a casting that forms the friction surface, rather than grit-like particles that are bonded to a roller body. The ability of the friction surface to resist damage is therefore dependent on the strength of the material of the casting, but is independent of the strength of any bonding material or the strength of the bond between the bonding material and the roller or grit-like particles.

## Description

This invention relates to machines for manoeuvring trailers, such as caravans, boat trailers and general-purpose trailers.

Such machines are known and are useful to enable a trailer to be manoeuvred, for example when parking a trailer or launching a boat, in circumstances where the trailer's usual towing vehicle cannot be employed. One known form of such a machine comprises: a roller; means for driving the roller for rotation about its axis; and means for mounting the roller on the trailer for movement between a disengaged position in which the roller is disengaged from a tyre of the trailer and an engaged position in which the peripheral surface of the roller is pressed into engagement with the tread of the tyre. The peripheral surface of the roller has a rough friction surface so that when the roller is driven while in the engaged position, the roller frictionally drives the trailer tyre. An example of such a machine is described in patent document GB2316922A. Such machines are usually employed in pairs, with the rollers of the two machines arranged to drive tyres on opposite sides of the trailer. With a suitable control system for the driving means of the machines, they can therefore be used to move the trailer forwards and backwards and to turn the trailer in various ways.

The rollers in such known machines have a steel body. During manufacture, the peripheral surface of the body is cleaned and then coated with resin. The body is then rolled in grit-like particles that stick to the resin. Once the resin cures, the grit-like particles become bonded by the resin to the steel body to provide the rough friction surface. The surface texture of these known rollers can provide sufficient friction with a conventional tyre in most circumstances. However, problems with the known rollers are that: good adhesion of the grit-like particles to the steel body is reliant upon cleanliness of the roller and the grit-like particles during manufacture; and even if a good bond can be achieved, the friction surface can become stripped from the roller body, for example if the drive means is operated after a pebble or large piece of gravel has become lodged between the roller and the supporting structure for the roller. The present invention, or at least specific embodiments of it, aims to alleviate these problems.

In the machine of a first aspect of the present invention, the roller comprises a casting that forms the friction surface. The ability of the friction surface to resist damage is therefore dependent on the strength of the material of the casting, but is independent of the strength of any resin bonding material or the strength of bond between the bonding material and the roller and between the bonding material and any grit-like particles.

The friction surface preferably has crests and troughs between the crests, so that its surface texture resembles the known friction rollers. In order to achieve good grip with the tyre, the majority of the crests preferably each rise to a height of at least 0.5 mm (and more preferably at least 1 mm) above the surrounding troughs. However, so as not to weaken the surface unduly, the majority of the crests preferably each rise to a height of no more than 3 mm (and more preferably no more than 2 mm) above the surrounding troughs. Also, in order to achieve good grip with the tyre, the majority of the crests preferably are each spaced at least 1 mm (and more preferably at least 2 mm) from the surrounding crests, but preferably are each spaced no more than 5 mm (and more preferably no more than 4 mm) from the surrounding crests. The crests and troughs are preferably arranged irregularly so that they do not, with prolonged use, wear a regular pattern into the tread of the tyre. The majority, if not all, of the crests are preferably blunt so that they can grip the tyre without cutting it.

The friction surface provided by the casting is preferably substantially inflexible.

The casting is preferably of metal, and more preferably of aluminium alloy. In the latter case, the roller is preferably gravity die cast from LM25 aluminium casting alloy and is fully heat-treated in accordance with standard LM25-TF. This provides good machinability, strength and corrosion resistance, and low weight.

Preferably, the same casting, after machining of its ends, provides a seat for a support bearing at one end of the roller, and a coupling connected to the driving means at the opposite end of the roller.

A second aspect of the invention provides a roller *per se* for the machine of the first aspect of the invention.

A specific embodiment of the present invention will now be described, purely by way of example, with reference to the accompanying drawings, in which:
- Figure 1: is a partial cross-sectional view of a prior art roller;
- Figure 2: is a partial cross-sectional view of a roller embodying the invention;
- Figure 3: is a side view of the roller of Figure 2, to a smaller scale;
- Figure 4: is a sectioned plan view of a trailer manoeuvring machine, trailer and tyre, partly in block form, employing the roller of Figures 2 and 3; and
- Figure 5: is a partial end view of the machine and tyre of Figure 4, viewed in the direction 5 shown in Figure 4, and showing the machine in an engaged position in full line and in a disengaged position in dotted line.

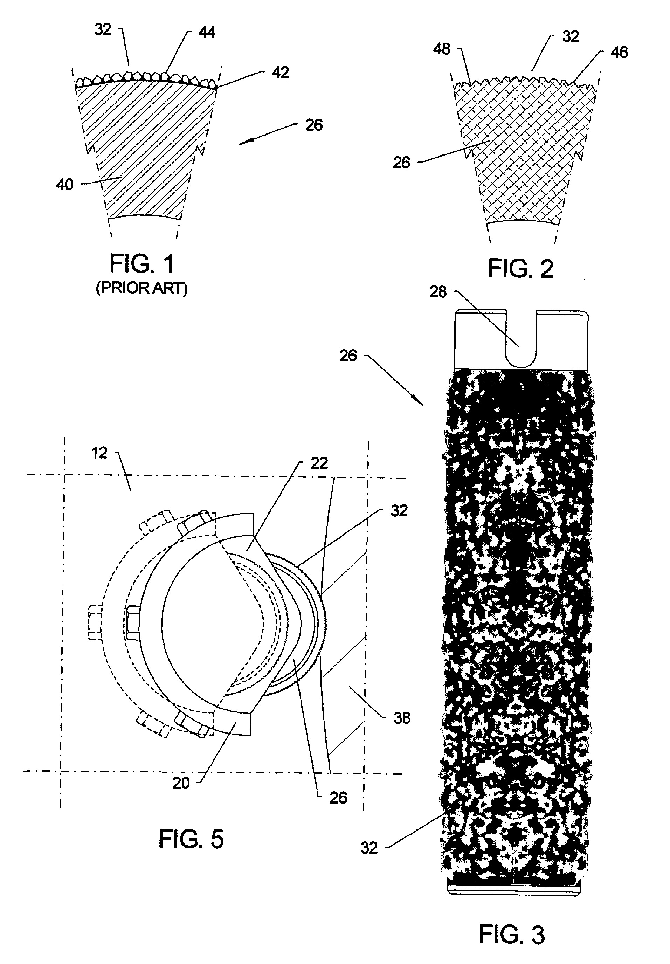

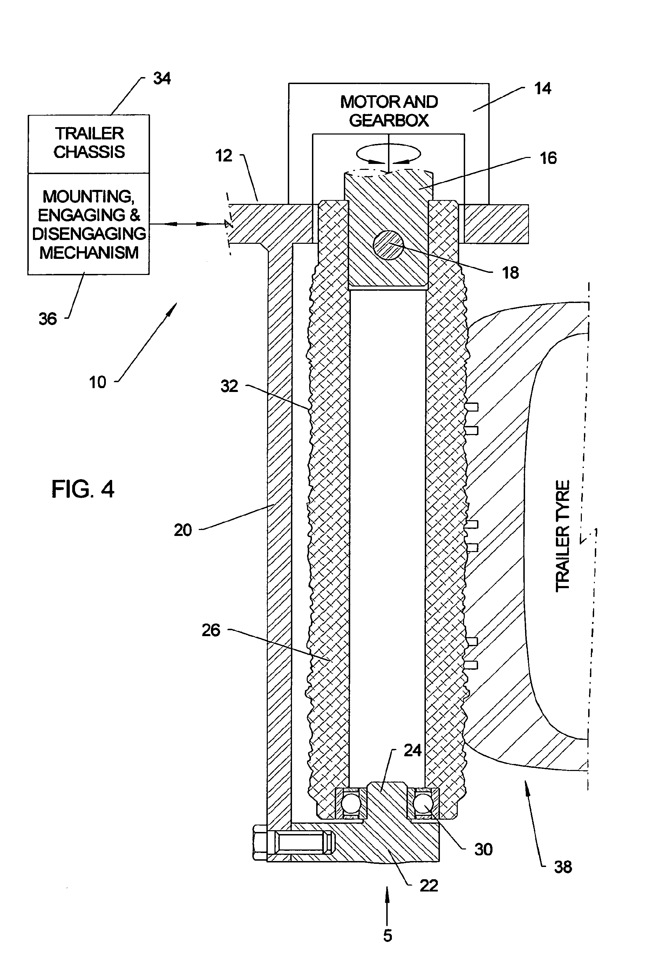

Referring first to Figures 4 and 5, a trailer manoeuvring machine 10 comprises a base plate 12 on which a 12V electric motor and gearbox assembly 14 is mounted. The motor and gearbox assembly 14 has an output shaft 16 that projects through a hole in the base plate 12, and the shaft 16 has a diametral hole near its end and a coupling pin 18 fitted in the hole. An arcuate section plate 20 is cantilevered from the base plate 12, extending alongside the axis of the output shaft 16. An end plate 22 is removably secured to the distal end of the arcuate plate 20 and has a stub 24 that faces and is coaxial with the output shaft 16. A drive roller 26 extends between the output shaft 16 and the stub 24. The drive roller 26 is generally a hollow cylinder. One end of the drive roller 26 is machined to receive the end of the output shaft 16 and has a pair of slots 28 (see Figure 3) that are engaged by the coupling pin 18. The other end of the drive roller 26 is machined to form a seat for a bearing 30 that is fitted to the stub 24. Over the majority of its length, the peripheral surface of the drive roller 26 forms a rough friction surface 32. The base plate 12 is mounted on the chassis 34 of a trailer by a mechanism 36 so that the drive roller 26 faces a tyre 38 of the trailer and so that the roller axis is generally parallel to and at a similar height to the axis of the wheel to which the tyre 38 is fitted. The mechanism 36 is manually operable to move the base plate 12 and thus the drive roller 26 between an engaged position (shown in full line in Figures 4 and 5) in which the drive roller 26 is pressed into engagement with the tread of the tyre 38, and a disengaged position (shown in dotted line in Figure 5) in which the drive roller 26 is spaced from the tread of the tyre 38. When in the engaged position, the motor and gearbox assembly 14 can be operated to rotate the drive roller 26 in a desired direction and, by frictional engagement between the friction surface 32 of the drive roller 26 and the tread of the tyre 38, to rotate the tyre 38 in a desired direction and thereby move the trailer. A similar machine is fitted to the opposite side of the trailer chassis 34 for cooperation with a tyre on the opposite side of the trailer. The two machines 10 can be operated together or separately to cause the trailer to move in a straight line or to turn. When the machines 10 are in their disengaged positions, the trailer can be towed in the normal way by a towing vehicle without interference by the machines 10.

Insofar as has been described in the preceding paragraph, the trailer manoeuvring machine 10 is known.

Referring to Figure 1, in the known machine, the roller 26 has a generally cylindrical steel body 40. As mentioned in the introduction, during manufacture, the peripheral surface of the body 40 is cleaned and then coated with resin 42. The body is then rolled in grit-like particles 44 that stick to the resin 42. Once the resin 42 cures, the grit-like particles 44 become bonded by the resin 42 to the steel body 40 to provide the rough friction surface 32.

By contrast, and referring to Figures 2 and 3, in the embodiment of the invention the drive roller 26 is a casting of aluminium alloy that provides, in one-piece, after machining (i) the body of the roller 26; (ii) the bore and slots for receiving the output shaft 16 and coupling pin 18; (iii) the seat to receive the bearing 30; and (iv) the rough friction surface 32. The casting is machined to provide a longitudinal through-hole, the coupling slots 28 and the bearing seat, but the majority of the outer peripheral surface of the casting is used as-cast to provide the friction surface 32.

The friction surface 32 is an irregular arrangement of crests 46 and troughs 48. Most of the crests 46 each rise to a height of about 1 to 2 mm above their surrounding troughs 48, and most of the crests 46 are each spaced about 2 to 4 mm from their nearest crests 46. The crests are not sharp in the sense that if the friction surface 32 skids in operation on the tread of the tyre 38, it will not immediately cut the tread of the tyre 38 to any significant extent.

The roller 26 may be cast in a mould made using the conventional roller (Figure 1) as a pattern. The roller 26 may be sand cast, but preferably is die cast so as to provide improved strength. The casting alloy is preferably Al-Si7Mg conforming to British Standard 1490 LM25, and is preferably fully heat-treated after casting according to standard LM25-TF.

The roller 26 may typically have a diameter of about 40 mm, and the length of the friction surface 32 may typically be about 140 mm.

It will be appreciated that many modifications and developments may be made to the embodiment of the invention described above. For example, in the case where the output shaft 16 of the motor and gearbox assembly 14 is tubular, the corresponding end of the drive roller 26 may be formed with a cylindrical spigot that is fitted into and coupled to the tubular shaft 16.

It should be noted that the embodiment of the invention has been described above purely by way of example and that many modifications and developments may be made thereto within the scope of the present invention.

## Claims

1. A machine (10) for manoeuvring a trailer (34,38) comprising: a roller (26); means (14,16) for driving the roller for rotation about its axis; and means (12,20,22,36) for mounting the roller on the trailer for movement between a disengaged position in which the roller is disengaged from a tyre (38) of the trailer and an engaged position in which the peripheral surface of the roller is pressed into engagement with the tread of the tyre; the peripheral surface of the roller having a rough friction surface so that when the roller is driven while in the engaged position, the roller frictionally drives the trailer tyre; **characterised in that** the roller comprises a casting that forms the friction surface.

2. A machine as claimed in claim 1, wherein the friction surface has crests and troughs between the crests.

3. A machine as claimed in claim 2, wherein the majority of the crests each rise to a height of at least 0.5 mm, and preferably at least 1 mm, above the surrounding troughs.

4. A machine as claimed in claim 2 or 3, wherein the majority of the crests each rise to a height of no more than 3 mm, and preferably no more than 2 mm, above the surrounding troughs.

5. A machine as claimed in any of claims 2 to 4, wherein the majority of the crests are each spaced at least 1 mm, and preferably at least 2 mm, from the surrounding crests.

6. A machine as claimed in any of claims 2 to 5, wherein the majority of the crests are each spaced no more than 5 mm, and preferably no more than 4 mm, from the surrounding crests.

7. A machine as claimed in any of claims 2 to 6, wherein the crests and troughs are arranged irregularly.

8. A machine as claimed in any of claims 2 to 7, wherein the majority of the crests are blunt.

9. A machine as claimed in any preceding claim, wherein the friction surface provided by the casting is substantially inflexible.

10. A machine as claimed in any preceding claim, wherein the casting is of metal, preferably of aluminium alloy.

11. A machine as claimed in any preceding claim, wherein the casting provides a seat for a support bearing (30) at one end of the roller, and a coupling (28) connected to the driving means at the opposite end of the roller.

12. The roller (26) *per se* for the machine (10) as claimed in any preceding claim.
